# EUROPÄISCHE PATENTSCHRIFT

(11) **EP 2 697 079 B1**
(45) Veröffentlichungstag und Bekanntmachung des Hinweises auf die Patenterteilung: **05.08.2015**
(21) Anmeldenummer: 12715673.5
(22) Anmeldetag: 12.04.2012
(51) Int. Cl.: B60C 23/00

(54) **VORRICHTUNG ZUR ANPASSUNG DES REIFENDRUCKS WÄHREND DER FAHRT**
DEVICE FOR ADAPTING THE TYRE PRESSURE DURING TRAVEL
DISPOSITIF PERMETTANT D'ADAPTER LA PRESSION D'UN PNEUMATIQUE DURANT LE TRAJET

(30) Priorität: 14.04.2011 DE 102011017118
(43) Veröffentlichungstag der Anmeldung: 19.02.2014
(73) Patentinhaber: KNORR-BREMSE Systeme für Nutzfahrzeuge GmbH, 80809 München (DE)
(72) Erfinder: VOITH, Andras, H-1183 Budapest (HU); TOTH, Janos, H-6000 Kecskemét (HU); MIHALYI, Attila, H-6000 Kecskemét (HU); KANTOR, Kornel, H-6000 Kecskemét (HU)
(86) Internationale Anmeldenummer: PCT/EP2012/056629
(87) Internationale Veröffentlichungsnummer: WO 2012/140110

(56) Entgegenhaltungen:
- DE-A1- 2 823 045
- DE-A1- 3 108 247

## Beschreibung

Die Erfindung betrifft eine Vorrichtung zur Anpassung des Ist-Reifendrucks wenigstens eines Reifens eines Rades einer Achse eines Fahrzeugs an einen aktuellen Soll-Reifendruck während der Fahrt, gemäß dem Oberbegriff von Anspruch 1.

Fahrzeuge, die unter wesentlich unterschiedenen Straßenverhältnissen wie befestigte Strassen, Gelände, Sand, oder Sumpf eingesetzt werden, benötigen eine Anpassung des Reifendrucks auch während der Fahrt an die unterschiedlichen Betriebverhältnisse.

Aus DE 38 36 105 A1 ist eine Vorrichtung zur Anpassung des Ist-Reifendrucks wenigstens eines Reifens eines Rades einer Achse eines Fahrzeugs an einen aktuellen Soll-Reifendruck während der Fahrt bekannt, bei welcher eine mit den Rädern mitdrehende Drucksteuereinrichtung mittels zweier Leitungen mit einer chassisseitigen Zentralregelung gekoppelt sind, wobei die eine Leitung für Be- und Entlüften der Reifen und die andere Leitung für die Steuerung der Rad-Steuergeräte dienen. Daher sind auch zwei Drehverbindungen zwischen den chassisseitigen drehfesten Leitungsteilen und mit dem Rad mitdrehenden Leitungsteilen notwendig, was zu hohen Kosten und einer geringen Zuverlässigkeit führt, weil die oben genannten Drehverbindungen zu Undichtigkeiten neigen..

Weiterhin ist aus DE 3 836 105 A1 bzw. DE 3 246 601 A1 jeweils eine Vorrichtung zur Anpassung des Ist-Reifendrucks an einen aktuellen Soll-Reifendruck während der Fahrt mit nur einer Leitung bekannt, wo die einzige Leitung für die Steuerung als auch für Be- und Entlüftung der Reifen dient. Zum Öffnen und/oder Schließen einer radseitigen Steuerventileinrichtung sind Druckimpulse notwendig, wodurch die chassisseitigen Zentraleinrichtungen relativ komplex ausfallen. Gemäß DE 2 630 511 A1 und DE 3 300 457 A1 sind die chassisseitigen Zentraleinrichtungen hierzu elektronisch gesteuert, wobei eine solche elektronische Steuerung insbesondere unter extremen Betriebsbedingungen, wie sie gerade Geländefahrzeuge ausgesetzt sind, bezüglich ihrer Zuverlässigkeit kritisch sein kann.

Aus DE 10 360 764 A1 ist eine Vorrichtung zur Anpassung des Ist-Reifendrucks an einen aktuellen Soll-Reifendruck während der Fahrt bekannt, bei welcher zur Entlüftung der Reifen die Druckluft durch eine Abblasöffnung der radseitigen Drucksteuereinrichtung ins Freie geführt wird. Diese Lösung ist wegen der möglichen Verschmutzung der Abblasöffnung insbesondere bei Wasserdurchfahrt oder bei Amphibienfahrzeugen nachteilig.

Beispielsweise aus DE 2 929 894 A1 ist eine Lösung bekannt, bei welcher Überströmventile als 2/2-Wegeventile verwendet werden, die in Sperrstellung federbelastet und in Durchlassstellung vom Soll-Reifendruck belastet sind in der radseitigen Drucksteuereinrichtung eingesetzt werden. Dies hat den Nachteil, dass diese Ventile nur innerhalb eines relativ kleinen Druckbereichs (pₘₐₓ/pₘᵢₙ ca. 4:1) öffnen und schließen und während der Entlüftung des Reifens bei kleinen Druckwerten nur geringe Durchflussquerschnitte zur Verfügung stellen, wodurch die Zeitdauer der Entlüftung sehr lang ist.

Aus EP 0 368 365 A1 ist eine Lösung bekannt, bei welcher die radseitige Drucksteuereinrichtung nach dem Prinzip eines Überströmventils ausgebildet ist, welches pneumatisch angesteuert wird. Die pneumatische Ansteuerung soll aber lediglich verhindern, dass im Falle einer Beschädigung des Reifens dieser weiter befüllt und der Druckluftbehälter dadurch geleert wird.

In DE 31 08 247 A1 wird ebenfalls ein Überströmventil in der radseitigen Drucksteuereinrichtung eingesetzt, welches pneumatisch angesteuert wird.

Als Steuerdruck wird dabei ein Staudruck oder Differenzdruck herangezogen, der von einer in der Versorgungsleitung ausgebildeten Drossel stammt. Das Prinzip hat den Nachteil, dass bei geringer Drosselung, um die Be - und Entlüftung nicht zu verzögern, auch der Druckbereich nur relativ klein ist bzw. bei einer mehr effektiven Drosselung die Be- und Entlüftungszeit relativ lang ist.

Aus der gattungsbildenden DE 2 823 045 A1 ist eine Lösung bekannt, bei welcher die Belüftung und Entlüftung durch ein vorgesteuertes Radsteuerventil erfolgt. Infolge der Vorsteuerung kann ein schnelles Schließen des Radsteuerventils erfolgen, aber nur wenn der maximal erlaubte Reifendruck erreicht wird. Bei geringeren einzustellenden Reifendrücken als dem maximal erlaubten Reifendruck und besonders bei Reifendruckminderung ist die Vorsteuerung nicht aktiv, so dass das Radsteuerventil erst bei Minimaldruck schließt, wobei der Schließdruck durch Federkräfte von Federmitteln definiert und konstant ist. Bei Drücken zwischen dem maximalen und dem minimalen Reifendruck bleibt das Radsteuerventil hingegen offen, wodurch die Leitungen und Drehverbindungen nicht druckentlastet sind, was die Zuverlässigkeit herabsetzt.

Der Erfindung liegt demzufolge die Aufgabe zugrunde, eine Vorrichtung zur Anpassung des Ist-Reifendrucks wenigstens eines Reifens eines Fahrzeugs an einen aktuellen Soll-Reifendruck während der Fahrt derart fortzubilden, dass sie eine schnelle Druckanpassung bei hoher Zuverlässigkeit und einfachem Aufbau ermöglicht.

Diese Aufgabe wird erfindungsgemäß durch die Merkmale von Anspruch 1 gelöst.

### Offenbarung der Erfindung

Es wird eine Vorrichtung zur Anpassung des Ist-Reifendrucks wenigstens eines Reifens eines Rades einer Achse eines Fahrzeugs an einen aktuellen Soll-Reifendruck während der Fahrt vorgeschlagen, welche Folgende s beinhaltet:
a) eine chassisseitige Zentraleinrichtung, welche entweder den aktuellen Soll-Reifendruck in einen mit dem Rad mitdrehenden Anschluss einer achs- oder radbezogenen pneumatischen Drucksteuereinrichtung einsteuert, um den Ist-Reifendruck an den Soll-Reifendruck anzupassen, oder diesen Anschluss entlüftet, wenn der Ist-Reifendruck gleich dem Soll-Reifendruck ist, wobei
b) die Drucksteuereinrichtung wenigstens einen weiteren, mit dem Ist-Reifendruck belastbaren Anschluss und
c) wenigstens ein Steuerventil mit einer den einen Anschluss mit dem weiteren Anschluss verbindenden Durchgangsstellung und mit einer diese Verbindung sperrenden Sperrstellung beinhaltet, wobei das Steuerventil gegenläufig pneumatisch gesteuert ist und einer seiner pneumatischen Steueranschlüsse mit dem einen Anschluss in Verbindung steht, wobei
d) die Drucksteuereinrichtung wenigstens ein das Steuerventil vorsteuerndes Vorsteuerventil beinhaltet, welches entweder den an dem einen Anschluss anstehenden Druck oder den an dem weiteren Anschluss anstehenden Ist-Reifendruck in den anderen pneumatischen Steueranschluss des Steuerventils einsteuert oder eine solche Einsteuerung unterbindet, wobei
e) das Vorsteuerventil wenigstens durch einen an dem einen Anschluss anstehenden Druck und/oder wenigstens durch den an dem weiteren Anschluss anstehenden Ist-Reifendruck pneumatisch gesteuert ist, wobei
f) die Drucksteuereinrichtung eine das Steuerventil und das Vorsteuerventil umgehende und den einen Anschluss mit dem weiteren Anschluss verbindende Bypassleitung mit einem in Belüftungsrichtung des Reifens öffnenden und in Entlüftungsrichtung des Reifens sperrenden Rückschlagventil aufweist.

Der Vorteil dieser Maßnahmen liegt darin, dass zum einen nur eine einzige Leitung zwischen der Zentraleinrichtung und der Drucksteuereinrichtung und somit auch nur eine einzige Drehverbindung pro Rad zwischen dem drehfesten Leitungsteil und dem drehenden Leitungsteil für die Steuerung und auch für die Be- bzw. Entlüftung notwendig ist. Dies wirkt sich günstig auf die Zuverlässigkeit der Vorrichtung aus, weil die Abdichtung einer solchen Drehverbindung unter Druck schneller verschleißt.

Insgesamt wird die Drehverbindung der einzigen zwischen dem drehfesten Leitungsteil und dem drehenden Leitungsteil zwischen der Zentraleinrichtung und der Drucksteuereinrichtung gezogenen Leitung lediglich in Phasen der Druckanpassung des Ist-Reifendrucks an den Soll-Reifendruck belastet und ansonsten druckentlastet, wodurch die Dichtung der Drehverbindung nur kurzzeitig belastet ist.

Mit der erfindungsgemäßen Vorrichtung muss zum Anpassen des Ist-Reifendrucks an einen neuen Soll-Reifendruck lediglich der eine Anschluss mit dem neuen einzustellenden Soll-Reifendruck belastet werden, was eine einfache, kostengünstige und zuverlässige Zentraleinrichtung ermöglicht.

Weiterhin erfolgt die Abblasung zur Reduzierung des Ist-Reifendrucks über die Leitung zwischen der rad- oder achsseitigen Drucksteuereinrichtung und der Zentraleinrichtung chassisseitig, weshalb Probleme mit eindringendem Schmutz oder Feuchtigkeit im Falle einer Abblasung durch die rad- oder achsseitige Drucksteuereinrichtung vermieden werden.

Bei der hier vorgestellten Lösung dient das Steuerventil der Drucksteuereinrichtung bevorzugt zur Anpassung des Reifendrucks in einem Druckbereich, der unterhalb einer vorgegebenen Druckschwellwerts liegt, wobei dieser Druckbereich nach oben hin, also für Drücke größer als dieser Schwellwert erweitert ist, indem das Steuerventil durch das Vorsteuerventil vorgesteuert wird.

Durch die in den Unteransprüchen aufgeführten Maßnahmen sind vorteilhafte Weiterbildungen und Verbesserungen der in Anspruch 1 angegebenen Erfindung möglich.

Besonders bevorzugt ist das Steuerventil ein pneumatisches 2/2-Wegeventil. Ebenso ist das Vorsteuerventil bevorzugt ein pneumatisch gesteuertes 2/2-Wegeventil mit einer Sperrstellung und einer Durchlassstellung, welches in der Durchlassstellung entweder den an dem einen Anschluss anstehenden Druck oder den an dem weiteren Anschluss anstehenden Ist-Reifendruck in den anderen pneumatischen Steueranschluss des Steuerventils einsteuert und in seiner Sperrstellung eine solche Einsteuerung unterbindet.

Gemäß einer bevorzugten Ausführungsform kann das Vorsteuerventil durch Federmittel in die Sperrstellung belastet sein, welche derart ausgelegt sind, dass es für Druckwerte des Drucks an dem einen Anschluss kleiner als ein oberer Schwellwert in Sperrstellung gehalten und für Druckwerte des Drucks an dem einen Anschluss größer oder gleich dem oberen Schwellwert in Durchlassstellung geschaltet wird.

In diesem Fall wirkt das Steuerventil mit dem Vorsteuerventil derart zusammen, dass
a) für Druckwerte des an dem einen Anschluss anstehenden Drucks kleiner als der obere Schwellwert das Steuerventil in Durchlassstellung und das Vorsteuerventil in Sperrstellung geschaltet ist, und
b) für Druckwerte des an dem einen Anschluss anstehenden Drucks größer oder gleich dem oberen Schwellwert das Steuerventil in Sperrstellung und das Vorsteuerventil in Durchlassstellung geschaltet ist.

Mit diesen Maßnahmen lässt sich ein relativ großer Druckeinstellbereich für den Soll-Reifendruck erzielen.

Gemäß einer alternativen Ausführungsform ist das Vorsteuerventil ein pneumatisch gesteuertes Differenzdruckventil ist, welches durch den an dem einen Anschluss anstehenden Druck in die Durchlassstellung und durch den an dem weiteren Anschluss anstehenden Ist-Reifendruck in die Sperrstellung belastet ist. Dabei kann das Vorsteuerventil zusätzlich Federmittel umfassen, welches es in Durchlassstellung vorspannen, wobei es für Druckwerte des Drucks an dem einen Anschluss größer oder gleich dem an dem weiteren Anschluss anstehenden Ist-Reifendruck in Durchlassstellung geschaltet wird und für Druckwerte des Drucks an dem einen Anschluss kleiner als der an dem weiteren Anschluss anstehenden Ist-Reifendruck in Sperrstellung geschaltet ist. Auch hierdurch lässt sich ein relativ großer Druckeinstellbereich für den Soll-Reifendruck erzielen, welcher an dem einen Anschluss ansteht.

Wie bereits weiter oben angedeutet, stellt der eine Anschluss bevorzugt einen einzigen Anschluss zur Verbindung der Drucksteuereinrichtung mit der chassisseitigen Zentraleinrichtung dar. Somit wird über die einzige Leitung zwischen der chassisseitigen Zentraleinrichtung und der radbezogenen Drucksteuereinrichtung, eine einzige Drehverbindung und einen einzigen chassisseitigen Anschluss der betreffende Soll-Druck in die Drucksteuereinrichtung eingesteuert, welcher gleichzeitig den Versorgungsdruck für den betreffenden Reifen als auch den Steuerdruck für die Drucksteuereinrichtung bildet.

Somit ist die chassisseitige Zentraleinrichtung mit der Drucksteuereinrichtung über eine Leitung verbunden, die einen achsseitigen drehfesten Leitungsteil und einen mit dem Rad mitdrehenden Leitungsteil sowie eine Drehverbindung zwischen dem drehfesten Leitungsteil und dem mit dem Rad mitdrehenden Leitungsteil aufweist.

Gemäß einer Weiterbildung ist zwischen das Steuerventil und den weiteren Anschluss wenigstens ein pneumatisches Sicherheitsventil als 2/2-Wegeventil geschaltet, welches an seinem pneumatischen Steueranschluss durch den an dem weiteren Anschluss anstehenden Ist-Reifendruck in die Durchgangsstellung belastet und bei einem unterhalb eines unteren Schwellwerts liegenden Ist-Reifendruck federbelastet in Sperrstellung geschaltet ist. Mit einem solchen Sicherheitsventil kann im Falle einer Leckage im Reifen eine weitere Belüftung des Reifens verhindert werden, indem dann der Ist-Reifendruck an dem weiteren Anschluss abfällt und das durch den Ist-Reifendruck gesteuerte Sicherheitsventil federbelastet in Sperrstellung schaltet, um den beschädigten Reifen von der Drucksteuereinrichtung abzukoppeln.

Die Drucksteuereinrichtung weist bevorzugt einen Füllanschluss für eine externe Druckbeaufschlagung auf, was in Belüftungsrichtung des Reifens dem Steuerventil und dem anderen Anschluss nachgeordnet ist, damit der Reifen durch eine externe Druckquelle befüllt werden kann, beispielsweise, wenn der Ist-Reifendruck unter einem Minimaldruckwert liegt, wie z.B. nach Reifenmontage.

Die genaue Funktionsweise der erfindungsgemäßen Vorrichtung wird durch die folgende Beschreibung von Ausführungsbeispielen deutlich.

### Zeichnung

In der Zeichnung zeigt
- Fig.1: einen schematischen Schaltplan einer bevorzugten Ausführungsform einer Vorrichtung zur Anpassung des Ist-Reifendrucks wenigstens eines Reifens eines Rades einer Achse eines Fahrzeugs an einen aktuellen Soll-Reifendruck während der Fahrt;
- Fig.2: einen schematischen Schaltplan einer Drucksteuereinrichtung der Vorrichtung von Fig.1 gemäß einer bevorzugten Ausführungsform;
- Fig.3: einen schematischen Schaltplan einer Drucksteuereinrichtung der Vorrichtung von Fig.1 gemäß einer weiteren Ausführungsform;
- Fig.4: ein Druck-Zeit-Diagramm eines Anpassungsvorgangs des Ist-Reifendrucks an einen demgegenüber höheren Soll-Reifendruck mit Hilfe der erfindungsgemäßen Vorrichtung;
- Fig.5: ein Druck-Zeit-Diagramm eines Anpassungsvorgangs des Ist-Reifendrucks an einen demgegenüber niedrigeren Soll-Reifendruck mit Hilfe der erfindungsgemäßen Vorrichtung.

### Beschreibung der Ausführungsbeispiele

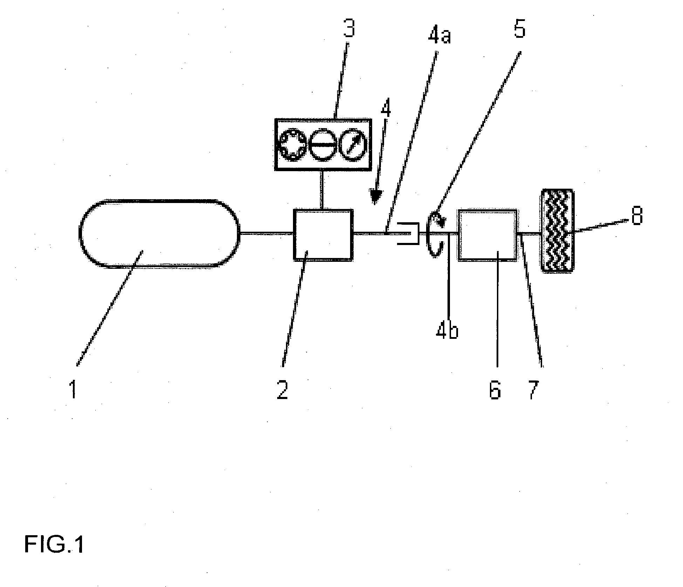

Die in Fig.1 schematisch gezeigte Vorrichtung zur Anpassung des Ist-Reifendrucks wenigstens eines Reifens eines Rades einer Achse eines Fahrzeugs an einen aktuellen Soll-Reifendruck beinhaltet einen fahrzeugseitigen Druckluftvorrat 1, eine Einrichtung 3 zur Soll-Reifendruckvorgabe, über welche eine Bedienperson während der Fahrt einen gewünschten Soll-Reifendruck für wenigstens einen Reifen einer Achse einstellen kann sowie eine chassisseitige Zentraleinrichtung 2.

Von den zweien an einer Achse üblicherweise angeordneten Rädern mit zugehörigen Reifen ist in Fig.1 aus Maßstabsgründen lediglich ein einziger Reifen 8 gezeigt. Es ist aber klar, dass auch der Soll-Reifendruck des zweiten Reifens derselben Achse bzw. auch der Soll-Reifendruck weiterer Reifen weiterer Achsen mit Hilfe der in Fig.1 gezeigten Vorrichtung angepasst werden kann.

Die Zentraleinrichtung 2 steuert entweder den von der Einrichtung 3 zur Soll-Reifendruckvorgabe vorgegebenen aktuellen Soll-Reifendruck in eine Leitung 4 ein, welche einen z.B. innerhalb eines Achskörpers verlaufenden drehfesten Leitungsteil 4a sowie einen mit dem Reifen 8 mitdrehenden Leitungsteil 4b aufweist. Außerdem ist die Zentraleinrichtung 2 ausgebildet, dass sie die Leitung 4 entlüftet, wenn der Ist-Reifendruck an den Soll-Reifendruck angepasst worden ist. Dabei wird Druckluft von dem drehfesten Leitungsteil 4a auf den mitdrehenden Leitungsteil 4b bzw. in entgegen gesetzter Richtung über eine Drehverbindung 5 übertragen, welche über entsprechende Dichtungen verfügt, um die beiden Leitungsteile 4a und 4b gegeneinander abzudichten.

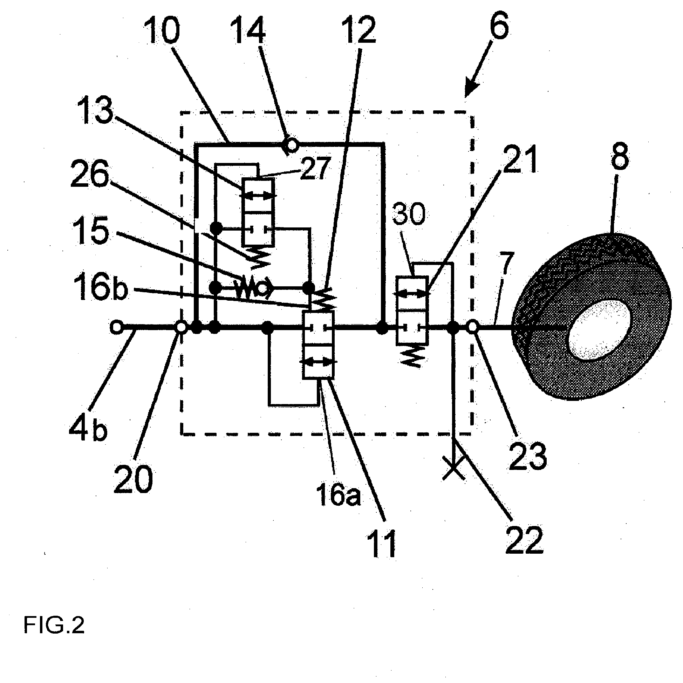

Wie aus Fig.2 hervorgeht, ist der mit dem Reifen 8 mitdrehende Leitungsteil 4b über einen Anschluss 20 mit einer achs- oder radbezogenen pneumatischen Drucksteuereinrichtung 6 druckleitend verbunden. Mit anderen Worten ist je Rad oder je Zwillingsräder eine eigene Drucksteuereinrichtung 6 vorgesehen. Die Drucksteuereinrichtung 6 dient zum Anpassen des an einem weiteren Anschluss 23 der Drucksteuereinrichtung 6 anstehenden Ist-Reifendrucks des Reifens 8 oder auch mehrerer Reifen 8 an den in die Leitung 4 bzw. den Anschluss 20 eingesteuerten Soll-Reifendruck. Der Anschluss 23 der Drucksteuereinrichtung 6 steht daher durch eine Leitung 7 mit dem Inneren des Reifens 8 in druckleitender Verbindung.

Die Drucksteuereinrichtung 6 weist ein Steuerventil 11 als pneumatisch gesteuertes 2/2-Wegeventil mit einer den einen Anschluss 20 mit dem weiteren Anschluss 23 verbindenden Durchgangsstellung und mit einer diese Verbindung sperrenden Sperrstellung auf, wobei der eine seiner pneumatischen Steueranschlüsse 16a mit dem einen Anschluss 20 in Verbindung steht.

Die Drucksteuereinrichtung 6 weist darüber hinaus ein das Steuerventil 11 vorsteuerndes Vorsteuerventil 13 auf, welches den an dem einen Anschluss 20 anstehenden Druck in den anderen pneumatischen Steueranschluss 16b des Steuerventils 11 einsteuert oder eine solche Einsteuerung unterbindet.

Das Vorsteuerventil 13 seinerseits ist durch den an dem einen Anschluss 20 und somit an seinem Steueranschluss 27 anstehenden Druck pneumatisch gesteuert. Genauer ist das Vorsteuerventil 13 ein pneumatisch gesteuertes 2/2-Wegeventil mit einer Sperrstellung und einer Durchlassstellung, welches in der Durchlassstellung den an dem einen Anschluss 20 anstehenden Druck in den anderen pneumatischen Steueranschluss 16b des Steuerventils 11 einsteuert und in seiner Sperrstellung eine solche Einsteuerung unterbindet.

Das Steuerventil 11 ist daher an seinen beiden Steueranschlüssen 16a, 16 b gegenläufig pneumatisch gesteuert, wobei es zusätzlich durch Federmittel 12 in seine Sperrstellung vorgespannt ist.

Das Vorsteuerventil 13 ist durch Federmittel 26 in die Sperrstellung belastet, welche derart ausgelegt sind, dass es für Druckwerte des Drucks an dem einen Anschluss 20 kleiner als ein oberer Schwellwert in Sperrstellung gehalten und für Druckwerte des Drucks an dem einen Anschluss 20 größer oder gleich dem oberen Schwellwert in Durchlassstellung geschaltet wird. Der obere Schwellwert für den Druck beträgt beispielsweise 4 bar (4·10⁵ Pa).

Die Vorrichtung 6 ist bevorzugt so ausgebildet, dass sowohl niedrige Soll-Reifendruckwerte für Geländefahrten sowie höhere Soll-Reifendruckwerte für die Straßenfahrt stufenlos einstellbar sind. Beispielsweise können Soll-Reifendruckwerte von 1 bis 4 bar für Geländefahrten gewählt werden, wobei der Wert 1 bar als Minimalwert und 4 bar als Maximalwert für Geländefahrt herangezogen wird. Dabei können zwischen den Extremwerten 1 bar und 4bar beliebige Werte für Geländefahrten gewählt als Soll-Reifendrücke eingestellt werden. Für Straßenfahrten können auch Soll-Reifendruckwerte von mehr als 4 bar eingestellt werden, beispielsweise 6 bar.

Das Steuerventil 11 wirkt dann mit dem Vorsteuerventil 13 derart zusammen, dass für Druckwerte des an dem einen Anschluss 20 anstehenden Drucks kleiner als der obere Schwellwert (z.B. 4bar) das Steuerventil 11 in Durchlassstellung und das Vorsteuerventil 13 in Sperrstellung geschaltet ist, wohingegen für Druckwerte des an dem einen Anschluss 20 anstehenden Drucks größer oder gleich dem oberen Schwellwert (z.B. 4bar) das Steuerventil 11 in Sperrstellung und das Vorsteuerventil 13 in Durchlassstellung geschaltet ist. Der obere Schwellwert wird hier also bevorzugt durch den Maximaldruckwert des Soll-Reifendrucks bei Geländefahrt gebildet.

Parallel zum Steuerventil 11 ist zwischen den Anschluss 20 und den anderen Steueranschluss 16b des Steuerventils eine Leitung mit einem Rückschlagventil 15 geschaltet. Das Rückschlagventil 15 erlaubt eine Rückströmung von dem weiteren Steueranschluss 16b zum Anschluss 20 und sperrt eine Strömung in Gegenrichtung.

Weiterhin weist die Drucksteuereinrichtung 6 eine das Steuerventil 11 und das Vorsteuerventil 13 umgehende und den einen Anschluss 20 mit dem weiteren Anschluss 23 verbindende Bypassleitung 10 mit einem in Belüftungsrichtung des Reifens 8 öffnenden und in Entlüftungsrichtung des Reifens 8 sperrenden Rückschlagventil 14 auf. Mit anderen Worten sperrt das Rückschlagventil 14 eine Strömung vom Reifen 8 in den Anschluss 20.

Nicht zuletzt ist zwischen das Steuerventil 11 und den weiteren Anschluss 23 ein pneumatisches Sicherheitsventil 21 als 2/2-Wegeventil geschaltet ist, welches an seinem pneumatischen Steueranschluss 30 durch den an dem weiteren Anschluss 23 anstehenden Ist-Reifendruck in die Durchgangsstellung belastet und bei einem unterhalb eines unteren Schwellwerts liegenden Ist-Reifendruck als Sicherungsdruck federbelastet in Sperrstellung geschaltet ist. Die Drucksteuerungseinrichtung 6 weist weiterhin bevorzugt einen Füllanschluss 22 für eine externe Druckbeaufschlagung auf, was in Belüftungsrichtung des Reifens 8 dem Steuerventil 21 und dem anderen Anschluss 23 nachgeordnet ist. Das Sicherheitsventil 21 ist so ausgebildet, dass es sich bei einem Reifendruck unter einem minimal zugelassen Druckwert, beispielsweise unter 1 bar durch Federkraft geschlossen gehalten wird.

Vor diesem Hintergrund ist die Funktionsweise der Vorrichtung gemäß Fig.2 wie folgt:
Bei durch die chassisseitige Zentraleinrichtung 2 entlüfteter Leitung 4, d.h., wenn der Ist-Reifendruck am Anschluss 23 dem Soll-Reifendruck entspricht, befinden sich das Vorsteuerventil 13 sowie das Steuerventil 11 in ihren in Fig.2 dargestellten Sperrstellungen. Das Sicherheitsventil 21 ist dagegen durch den an seinem Steueranschluss 24 anstehenden Reifendruck in Durchlassstellung geschaltet. Da somit eine Durchströmung des Steuerventils 11 verhindert wird wie auch eine Durchströmung der Bypassleitung 10 wegen des in dieser Richtung sperrenden Rückschlagventils 14 unmöglich ist, wird der Ist-Reifendruck, z.B. 2 bar im Reifen 8 eingesperrt.

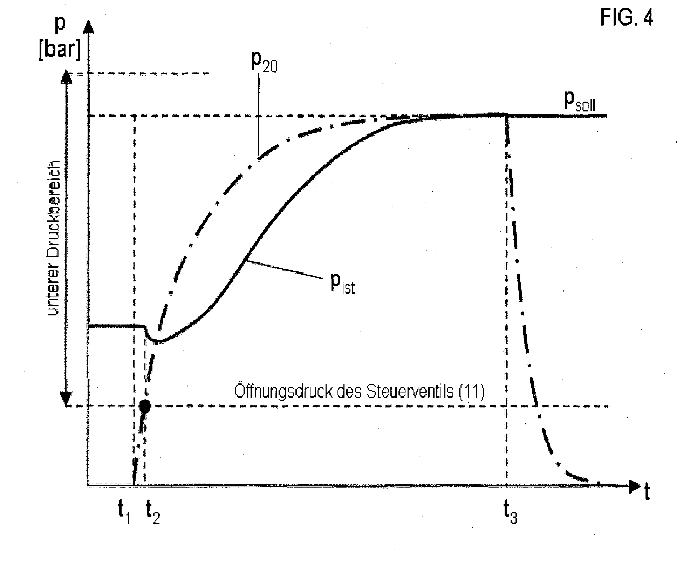

Wenn dann ausgehend von einem Ist-Reifendruck pᵢₛₜ von 2 bar der Ist-Reifendruck pᵢₛₜ im Reifen 8 auf einen Druck von 3bar erhöht werden soll, so wird dieser Druck zunächst von der Einrichtung 3 zur Soll-Reifendruckvorgabe durch eine Bedienperson während der Fahrt zum Zeitpunkt t₁ als neuer Soll-Reifendruck pₛₒₗₗ eingestellt und über die chassisseitige Zentraleinrichtung 2 und die Leitung 4 in den Anschluss 20 eingesteuert. Am Anschluss 20 steht ein Druck p20 an, was grundsätzlich vom Soll-Reifendruck bestimmt, aber auch von der Druckluftströmung temporär beeinflusst wird. Diese Situation wird durch das Druck-Zeit-Diagramm von Fig.4 dargestellt.

Das Steuerventil 11 bzw. dessen Federmittel 12 sind so eingestellt, dass es im unteren Druckbereich (im Beispiel von 1 bis 4 bar) vom Vorratsdruck oder Fülldruck p₂₀ am Anschluss 20 gegen Federdruck der Federmittel 12 geöffnet wird, so dass Druckmittel vom Anschluss 20 über das in Durchlassstellung geschaltete Steuerventil 11 und das ebenfalls in Durchlassstellung gehaltene Sicherheitsventil 21 zum Anschluss 23 und von dort in den Reifen 8 strömen kann, um dort den Ist-Reifendruck ausgehend vom Zeitpunkt t₂ auf 3 bar zu erhöhen bis der Ist-Reifendruck pᵢₛₜ dem Soll-Reifendruck pₛₒₗₗ zum Zeitpunkt t₃ entspricht. Danach wird die Leitung 4 bzw. der Anschluss 20 von der Zentraleinrichtung 2 entlüftet, so dass zwar der Ist-Reifendruck pᵢₛₜ auf dem neuen Wert 3 bar gehalten wird, aber der Fülldruck p₂₀ wieder abfällt, wie in Fig.4 veranschaulicht ist. Folglich stellt der Fülldruck p₂₀ einerseits einen Steuerdruck für die Drucksteuereinrichtung 6 sowie im Zeitraum t₂ bis t₃ eine Vorgabe für den einzustellenden Ist-Reifendruck pᵢₛₜ dar.

Die Federmittel 26 des Vorsteuerventils 13 sind indes so ausgebildet, dass das Vorsteuerventil 13 für an seinem Steueranschluss anstehenden Drücken innerhalb des Druckbereiches z.B. von 1 bis 4 bar nicht gegen die Federkräfte in Durchlassstellung geschaltet werden kann, so dass das Vorsteuerventil 13 durch die Federkräfte der Federmittel 26 in Sperrstellung gehalten wird. Somit ist der Druck an dem anderen Steueranschluss 16b des Steuerventils 11 niedrig und vermag addiert zu den Federkräften der Federmittel 12 dieses nicht gegen den Steuerdruck an dem einen Steueranschluss 16a in Sperrstellung umzuschalten.

Je nach Federkraft der das Rückschlagventil 14 belastenden Federmittel kann auch eine parallele Strömung entlang der Bypassleitung vom Anschluss 20 zum Anschluss 23 stattfinden.

Wenn nun der Soll-Reifendruck von 3bar auf Werte größer als 4bar für eine Straßenfahrt erhöht werden soll, so wird dieser Druck zunächst von der Einrichtung 3 zur Soll-Reifendruckvorgabe durch eine Bedienperson während der Fahrt als neuer Soll-Reifendruck eingestellt und über die chassisseitige Zentraleinrichtung 2 und die Leitung 4 in den Anschluss 20 eingesteuert.

Dort sorgt der neue Soll-Reifendruck von 4bar am Steueranschluss 27 dafür, dass das Vorsteuerventil 13 gegen die Wirkung seiner Federmittel 26 in Durchlassstellung geschaltet wird. Dann sorgt der neue Soll-Reifendruck an dem anderen Steueranschluss 16b des Steuerventils 11 zusammen mit den Federmitteln 12 dafür, dass das Steuerventil 11 gegen die Wirkung des parallel an seinem einen Steueranschluss 16a anstehenden neuen Soll-Reifendruck in Sperrstellung geschaltet wird. Die Verbindung zwischen dem Anschluss 20 und dem Anschluss 23 über das Steuerventil 11 ist dann gesperrt. Die Druckleitung vom Anschluss 20 in den Anschluss 23 erfolgt dann über die Bypassleitung 10, wobei das Rückschlagventil 14 in dieser Richtung öffnet.

Wenn ein Soll-Reifendruck größer als 4bar erwünscht ist, dann kann der Reifen 8 kann durch die Bypassleitung 10 weiter befüllt werden, bis der Ist-Reifendruck beispielsweise 6bar beträgt, was für Straßenfahrten auf befestigten Straßen optimal ist.

Nachdem der neue Soll-Reifendruck von z.B. 6bar erreicht ist, wird die Leitung 4 durch Zentraleinrichtung 2, welche als Druckregeleinrichtung ausgebildet ist, entlüftet. Dabei verhindern das in Sperrstellung gehaltene Steuerventil 11 sowie das Rückschlagventil 14 eine Rückströmung vom Reifen 8 in die Leitung 4. Weiterhin wird der Steueranschluss 27 des Vorsteuerventils 13 entlastet, welches daraufhin von den Federmitteln 26 in Sperrstellung gebracht wird. Auch das Steuerventil 11 wird an seinem anderen Steueranschluss 16b durch das Rückschlagventil 15 druckentlastet.

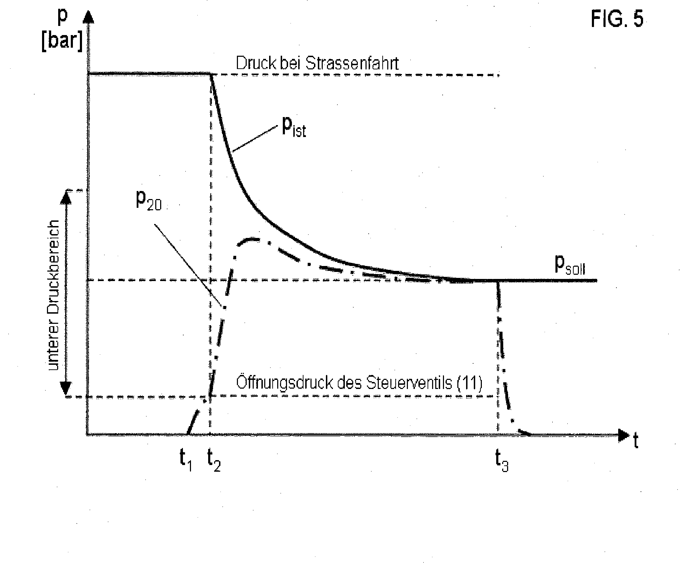

Wenn nun ausgehend von einem hohen Soll-Reifendruck ein demgegenüber reduzierter Soll-Reifendruck erwünscht ist, beispielsweise ein Soll-Reifendruck zwischen 1 bar und 4bar für Geländefahrten, so muss der neue Druckwert, beispielsweise 3bar, von der Einrichtung 3 zur Soll-Reifendruckvorgabe durch eine Bedienperson während der Fahrt als neuer Soll-Reifendruck pₛₒₗₗ eingestellt und über die chassisseitige Zentraleinrichtung 2 und die Leitung 4 in den Anschluss 20 eingesteuert werden. Diese Situation wird in Fig.5 veranschaulicht, wo zum Zeitpunkt t₁ der neue Soll-Reifendruck pₛₒₗₗ am Anschluss 20 eingestellt wird, wobei der Öffnungsdruck des Steuerventils 11 zum Zeitpunkt t₂ und der neue Wert 3bar für pₛₒₗₗ nur später erreicht ist.

Durch den neuen Druckwert 3bar wird das Steuerventil 11 in Durchlassstellung geschaltet, wodurch eine Rückströmung von Druckluft aus dem Reifen 8 durch das Sicherheitsventil 21, das Steuerventil 11, die Leitung 4 und zur Zentraleinrichtung 2 erfolgt, welche eine Entlüftung aufweist, durch welche der Überdruck abgeblasen wird. Wenn der erwünschte neue Druckwert dann zum Zeitpunkt t₃ erreicht ist, wird die Leitung 4, die Drehverbindung 5 und damit der Anschluss 20 von der Zentraleinrichtung 2 entlüftet, wodurch der Fülldruck p₂₀ sinkt und das Steuerventil 11 vermittels der Federkraft seiner Federmittel 12 in Sperrstellung geschaltet wird.

Falls der Ist-Reifendruck im Reifen aufgrund einer Leckage im Reifen unter den Mindestdruck von beispielsweise 1 bar fällt, beispielsweise auf 0,8 bar, so schließt das Sicherheitsventil 21 durch Federkraft seiner Federmittel, wodurch ein Befüllen des Reifens 8 verhindert wird. Dann kann der Reifen 8 aber mittels des Füllanschlusses 22 mit externer Druckluft befüllt werden.

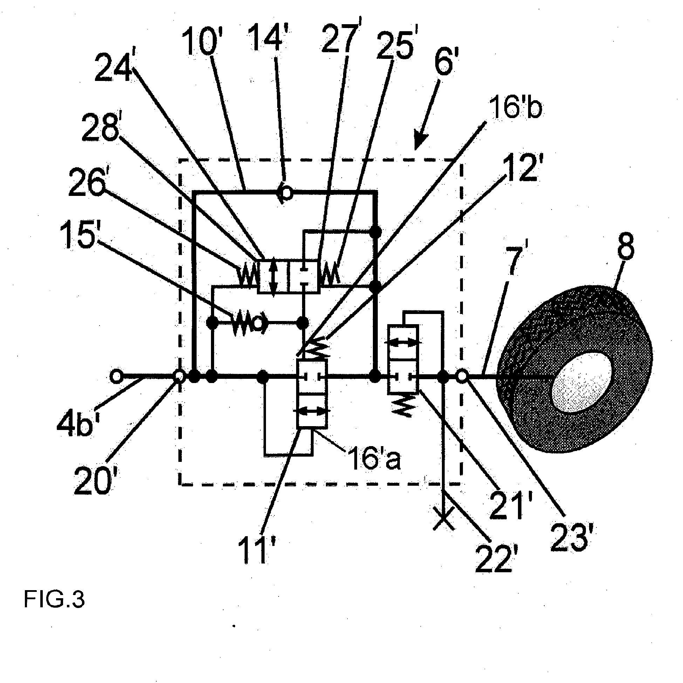

Bei dem in Fig.3 gezeigten weiteren Ausführungsbeispiel sind identische oder gleich wirkende Bauteile und Baugruppen gegenüber dem vorangehend beschriebenen Ausführungsbeispiel von Fig.2 mit den gleichen Bezugszahlen, aber mit einem Apostroph gekennzeichnet.

Die Drucksteuereinrichtung 6' ist wie beim vorangehenden Ausführungsbeispiel in den mitdrehenden Leitungsabschnitt 4b zwischen Drehverbindung 5' und Reifen 8' eingebaut und mit zwei Anschlüssen 20', 23' an die Leitungen 4b' und 7' angebunden. Die Drucksteuereinrichtung 6' enthält ein überströmventilartiges Steuerventil 11', welches wiederum zwei pneumatische Steueranschluss 16a', 16b' aufweist sowie in Sperrrichtung durch Federmittel 12' belastet ist. Insofern besteht kein Unterscheid zur Ausführungsform von Fig.1.

Hier jedoch wird das Steuerventil 11', genauer sein pneumatischer Steueranschluss 16b' von einem Differenzdruckventil 24' druckbeaufschlagt wird. Dadurch kann das Steuerventil 11' auch bei höheren Druckwerten oberhalb des Druckbereiches 4:1, beispielsweise bei Drücken größer als 4bar sicher geschlossen werden.

Das Differenzdruckventil 24' ist ein 2/2 Wegeventil mit Sperr- und Durchlassstellung und wird in die Sperr- wie auch in die Durchlassstellung durch Federmittel 25', 26' belastet. Die Federmittel 25', 26' sind so ausgelegt, dass das Differenzdruckventil 24' in Ruhelage, d.h. bei gleichen Druckbelastungen an seinen beiden gegenläufigen pneumatischen Steueranschlüssen 27', 28' in Durchlassstellung geschaltet ist. Dabei steht der eine Steueranschluss 28' mit dem Anschluss 20 in Verbindung und wird daher von dem von der Zentraleinrichtung 2 ausgesteuerten Druck beaufschlagt. Der andere Steueranschluss 27' ist an den Anschluss 23' gekoppelt und steht daher unter dem Ist-Reifendruck, wenn das hier ebenfalls vorhandene Sicherheitsventil 21' sich in Durchlassstellung befindet.

Folglich befindet sich das Differenzdruckventil 24' in Durchlassstellung, wenn der Druck am Anschluss 20 größer oder gleich dem Ist-Reifendruck pᵢₛₜ ist. Das Differenzdruckventil 24' befindet sich hingegen in Sperrstellung, wenn der Druck am Anschluss 20' kleiner als der Ist-Reifendruck pᵢₛₜ ist. Wenn sich das Differenzdruckventil 24' in Durchlassstellung aufgrund eines hohen Drucks am Anschluss 20 befindet, dann wird der Steueranschluss 16a' zusätzlich zur Federkraft der Federmittel 12' mit dem Ist-Reifendruck beaufschlagt und das Steuerventil 11' wird geschlossen gehalten oder nach einer Übergangsperiode geschlossen. Wenn hingegen der Leitungsteil 4b' bzw. der Anschluss 20' entlüftet wird, so wird der Steueranschluss 16'b durch das Rückschlagventil 15' und seine natürliche Drosselung vom Druck entlastet, jedoch zeitverzögert.

Vor diesem Hintergrund ist die Funktionsweise der Vorrichtung gemäß Fig.3 wie folgt:
In der Ruhelage ist die Leitung 4b' entlüftet, also der Ist-Reifendruck ist größer als der Druck in der Leitung 4b'. Das Differenzdruckventil 24' befindet sich in Sperrstellung und der Steueranschluss 16'b des Steuerventils 11' steht nicht unter Druck, wobei die Federkraft der Federmittel 12' das Steuerventil 11' geschlossen hält.

Wenn eine Druckerhöhung des Reifens 8' gewünscht ist, wird die Leitung 4b' von der Zentraleinrichtung 2 mit einem höheren Druck als dem aktuellen Ist-Reifendruck beaufschlagt. Der Reifen 8' wird dann grundsätzlich durch die Bypassleitung 10' und das Rückschlagventil 14' belüftet. Der Druck am Steueranschluss 28' ist dann größer als der Druck am Steueranschluss 27', wodurch das Differenzdruckventil 24' wird in seine Durchlassstellung geschaltet und der Steueranschluss 16'b des Steuerventils 11' mit Ist-Reifendruck beaufschlagt. Der Ist-Reifendruck wird mittels der Nachströmung durch die Bypassleitung 10' und das Rückschlagventil 14' soweit erhöht, dass sich die beiden Drücke ausgleichen, so dass das Steuerventil 11' schließt und die Leitung 4b' und zeitverzögert der Steueranschluss 16a' druckentlastet werden. Eine Rückströmung kann weder durch das Rückschlagventil 14' noch durch das Steuerventil 11' erfolgen.

Wenn eine Druckreduzierung im Reifen 8' gewünscht ist, wird die Leitung 4b' von der Zentraleinrichtung 2 mit einem gegenüber dem aktuellen Ist-Reifendruck niedrigeren Druck beaufschlagt. Das Differenzdruckventil 24' und auch das Rückschlagventil 15' bleiben geschlossen, der Steueranschluss 16'b wird nicht druckbeaufschlagt. Der von der Zentraleinrichtung 2 ausgesteuerte Druck öffnet das Steuerventil 11' und ermöglicht so eine Druckreduzierung im Reifen 8'. Wenn der Ist-Reifendruck dann an den von der Zentraleinrichtung 2 ausgesteuerten Druck angeglichen ist, wird das Differenzdruckventil 24' geöffnet und der Steueranschluss 16a' des Steuerventils 11' druckbeaufschlagt, wodurch dieses geschlossen wird. Dann wird die Leitung 4b' und zeitverzögert der Steueranschluss 16'b vom Druck entlastet.

Die Drucksteuereinrichtung 6' nach Fig.3 ist ebenfalls mit einem Sicherheitsventil 21' und mit einem Füllanschluss 22' versehen, wobei bezüglich der Funktionsweise auf die entsprechenden Ausführungen von Fig.2 verwiesen wird.

### Bezugszeichenliste

- 1: Druckluftvorrat
- 2: Zentraleinrichtung
- 3: Einrichtung 3 zur Soll-Reifendruckvorgabe
- 4: Leitung
- 4a: drehfestes Leitungsteil
- 4b: mitdrehendes Leitungsteil
- 5: Drehverbindung
- 6: Drucksteuereinrichtung
- 7: Leitung
- 8: Reifen
- 10: Bypassleitung
- 11: Steuerventil
- 12: Federmittel
- 13: Steuerventil
- 14: Rückschlagventil
- 15: Rückschlagventil
- 16a: Steueranschluss
- 16b: Steueranschluss
- 20: Anschluss
- 21: Sicherheitsventil
- 22: Füllanschluss
- 23: Anschluss
- 24: Differenzdruckventil
- 25: Federmittel
- 26: Federmittel
- 27: Steueranschluss
- 28: Steueranschluss
- 30: Steueranschluss

## Patentansprüche

1. Vorrichtung zur Anpassung des Ist-Reifendrucks wenigstens eines Reifens (8; 8') eines Rades einer Achse eines Fahrzeugs an einen aktuellen Soll-Reifendruck während der Fahrt, beinhaltend:
a) eine chassisseitige Zentraleinrichtung (2), welche entweder den aktuellen Soll-Reifendruck in einen mit dem Rad mitdrehenden Anschluss (20; 20') einer radbezogenen pneumatischen Drucksteuereinrichtung (6; 6') einsteuert, um den Ist-Reifendruck an den Soll-Reifendruck anzupassen, oder diesen Anschluss (20; 20') entlüftet, wenn der Ist-Reifendruck gleich dem Soll-Reifendruck ist, wobei
b) die Drucksteuereinrichtung (6, 6') wenigstens einen weiteren, mit dem Ist-Reifendruck belastbaren Anschluss (23; 23') und
c) wenigstens ein Steuerventil (11; 11') mit einer den einen Anschluss (20) mit dem weiteren Anschluss (23; 23') verbindenden Durchgangsstellung und mit einer diese Verbindung sperrenden Sperrstellung beinhaltet, wobei das Steuerventil (11; 11') gegenläufig pneumatisch gesteuert ist und einer seiner pneumatischen Steueranschlüsse (16a; 16a') mit dem einen Anschluss (20; 20') in Verbindung steht, wobei
d) die Drucksteuereinrichtung (6; 6') wenigstens ein das Steuerventil (11; 11') vorsteuerndes Vorsteuerventil (13; 24') beinhaltet, welches entweder den an dem einen Anschluss (20; 20') anstehenden Druck oder den an dem weiteren Anschluss (23; 23') anstehenden Ist-Reifendruck in den anderen pneumatischen Steueranschluss (16b; 16b') des Steuerventils (11; 11') einsteuert oder eine solche Einsteuerung unterbindet, wobei
e) das Vorsteuerventil (13; 24') wenigstens durch einen an dem einen Anschluss (20; 20') anstehenden Druck und/oder wenigstens durch den an dem weiteren Anschluss (23; 23') anstehenden Ist-Reifendruck pneumatisch gesteuert ist,
**dadurch gekennzeichnet, dass**
f) die Drucksteuereinrichtung (6; 6') eine das Steuerventil (11; 11') und das Vorsteuerventil (13; 24') umgehende und den einen Anschluss (20) mit dem weiteren Anschluss (23; 23') verbindende Bypassleitung (10; 10') mit einem in Belüftungsrichtung des Reifens (8; 8') öffnenden und in Entlüftungsrichtung des Reifens (8; 8') sperrenden Rückschlagventil (14; 14') aufweist.

2. Vorrichtung nach Anspruch 1, **dadurch gekennzeichnet, dass** das Steuerventil (11; 11') ein pneumatisches 2/2-Wegeventil ist.

3. Vorrichtung nach Anspruch 1 oder 2, **dadurch gekennzeichnet, dass** das Vorsteuerventil (13; 24') ein pneumatisch gesteuertes 2/2-Wegeventil mit einer Sperrstellung und einer Durchlassstellung ist, welches in der Durchlassstellung entweder den an dem einen Anschluss (20; 20') anstehenden Druck oder den an dem weiteren Anschluss (23; 23') anstehenden Ist-Reifendruck in den anderen pneumatischen Steueranschluss (16b; 16b') des Steuerventils (11; 11') einsteuert und in seiner Sperrstellung eine solche Einsteuerung unterbindet.

4. Vorrichtung nach Anspruch 3, **dadurch gekennzeichnet, dass** das Vorsteuerventil (13) durch Federmittel in die Sperrstellung belastet ist, welche derart ausgelegt sind, dass es für Druckwerte des Drucks an dem einen Anschluss (20) kleiner als ein oberer Schwellwert in Sperrstellung gehalten und für Druckwerte des Drucks an dem einen Anschluss (20) größer oder gleich dem oberen Schwellwert in Durchlassstellung geschaltet wird.

5. Vorrichtung nach Anspruch 4, **dadurch gekennzeichnet, dass** das Steuerventil (11) mit dem Vorsteuerventil (13) derart zusammenwirkt, dass
a) für Druckwerte des an dem einen Anschluss (20) anstehenden Drucks kleiner als der obere Schwellwert das Steuerventil (11) in Durchlassstellung und das Vorsteuerventil (13) in Sperrstellung geschaltet ist
b) für Druckwerte des an dem einen Anschluss (20) anstehenden Drucks größer oder gleich dem oberen Schwellwert das Steuerventil (11) in Sperrstellung und das Vorsteuerventil (13) in Durchlassstellung geschaltet ist.

6. Vorrichtung nach Anspruch 3, **dadurch gekennzeichnet, dass** das Vorsteuerventil (24') ein pneumatisch gesteuertes Differenzdruckventil ist, welches durch den an dem einen Anschluss (20') anstehenden Druck in die Durchlassstellung und durch den an dem weiteren Anschluss (23') anstehenden Ist-Reifendruck in die Sperrstellung belastet ist.

7. Vorrichtung nach Anspruch 6, **dadurch gekennzeichnet, dass** Vorsteuerventil (24') zusätzlich Federmittel (25', 26') umfasst, welches es in Durchlassstellung vorspannen, wobei es für Druckwerte des Drucks an dem einen Anschluss (20') größer oder gleich dem an dem weiteren Anschluss (23') anstehenden Ist-Reifendruck in Durchlassstellung geschaltet wird und für Druckwerte des Drucks an dem einen Anschluss (20') kleiner als der an dem weiteren Anschluss (23') anstehenden Ist-Reifendruck in Sperrstellung geschaltet ist.

8. Vorrichtung nach einem der vorhergehenden Ansprüche, **dadurch gekennzeichnet, dass** der eine Anschluss (20; 20') einen einzigen Anschluss zur Verbindung der Drucksteuereinrichtung (6; 6') mit der chassisseitige Zentraleinrichtung (2) darstellt.

9. Vorrichtung nach einem der vorhergehenden Ansprüche, **dadurch gekennzeichnet, dass** die chassisseitige Zentraleinrichtung (2) mit der Drucksteuereinrichtung (6; 6') über eine Leitung (4) verbunden ist, die einen achsseitigen drehfesten Leitungsteil (4a) und einen mit dem Rad mitdrehenden Leitungsteil (4b; 4b') sowie eine Drehverbindung (5) zwischen dem drehfesten Leitungsteil (4a) und dem mit dem Rad mitdrehenden Leitungsteil (4b; 4b') aufweist.

10. Vorrichtung nach einem der vorhergehenden Ansprüche, **dadurch gekennzeichnet, dass** zwischen das Steuerventil (11; 11') und den weiteren Anschluss (23; 23') ein pneumatisches Sicherheitsventil (21; 21') als 2/2-Wegeventil geschaltet ist, welches an seinem pneumatischen Steueranschluss durch den an dem weiteren Anschluss (23; 23') anstehenden Ist-Reifendruck in die Durchgangsstellung belastet und bei einem unterhalb eines unteren Schwellwerts liegenden Ist-Reifendruck federbelastet in Sperrstellung geschaltet ist.

11. Vorrichtung nach Anspruch 10, **dadurch gekennzeichnet, dass** die Drucksteuereinrichtung (6; 6') einen Füllanschluss (22; 22') für eine externe Druckbeaufschlagung des Reifens (8; 8') aufweist.

## Claims

1. Device for adapting the actual tyre pressure of at least one tyre (8; 8') of a wheel of an axle of a vehicle to a current set tyre pressure during travel, comprising:
a) a chassis-side central apparatus (2) which either feeds the current set tyre pressure into a connection (20; 20'), which rotates with the wheel, of a wheel-related pneumatic pressure control apparatus (6; 6') in order to adapt the actual tyre pressure to the set tyre pressure, or vents this connection (20; 20') if the actual tyre pressure is equal to the set tyre pressure, wherein
b) the pressure control apparatus (6, 6') contains at least one further connection (23; 23') to which the actual tyre pressure can be applied, and
c) at least one control valve (11; 11') having an open position which connects the one connection (20) to the further connection (23; 23') and having a closed position which closes this connection, wherein the control valve (11; 11') is controlled pneumatically in opposite directions, and one of its pneumatic control connections (16a; 16a') is connected to the one connection (20; 20'), wherein
d) the pressure control apparatus (6; 6') contains at least one pilot valve (13; 24') which performs pilot control of the control valve (11; 11') and which feeds either the pressure present at the one connection (20; 20') or the actual tyre pressure present at the further connection (23; 23') into the other pneumatic control connection (16b; 16b') of the control valve (11; 11') or prevents such feeding in, wherein
e) the pilot valve (13; 24') is controlled pneumatically at least by a pressure present at the one connection (20; 20') and/or at least by the actual tyre pressure present at the further connection (23; 23'),
**characterised in that**
f) the pressure control apparatus (6; 6') has a bypass line (10; 10') which bypasses the control valve (11; 11') and the pilot valve (13; 24') and connects the one connection (20) to the further connection (23; 23') and has a non-return valve (14; 14') which opens in the inflation direction of the tyre (8; 8') and closes in the venting direction of the tyre (8; 8').

2. Device according to claims 1, **characterised in that** the control valve (11; 11') is a pneumatic 2/2-way valve.

3. Device according to claims 1 or 2, **characterised in that** the pilot valve (13; 24') is a pneumatically controlled 2/2-way valve which has a closed position and an open position and which, in the open position, feeds either the pressure present at the one connection (20; 20') or the actual tyre pressure present at the further connection (23; 23') into the other pneumatic control connection (16b; 16b') of the control valve (11; 11') and in its closed position prevents such feeding in.

4. Device according to claims 3, **characterised in that** the pilot valve (13) is loaded towards the closed position by spring means, which spring means are configured in such a way that said pilot valve (13) is held in the closed position for pressure values of the pressure at the one connection (20) which are lower than an upper threshold value, and is switched to the open position for pressure values of the pressure at the one connection (20) which are higher than or equal to the upper threshold value.

5. Device according to claims 4, **characterised in that** the control valve (11) interacts with the pilot valve (13) in such a way that:
a) the control valve (11) is switched to the open position and the pilot valve (13) is switched to the closed position for pressure values of the pressure present at the one connection (20) which are lower than the upper threshold value, and
b) the control valve (11) is switched to the closed position and the pilot valve (13) is switched to the open position for pressure values of the pressure present at the one connection (20) which are higher than or equal to the upper threshold value.

6. Device according to claims 3, **characterised in that** the pilot valve (24') is a pneumatically controlled differential pressure valve which is loaded towards the open position by the pressure present at the one connection (20') and loaded towards the closed position by the actual tyre pressure present at the further connection (23').

7. Device according to claims 6, **characterised in that** the pilot valve (24') additionally comprises spring means (25', 26') which preload it towards the open position, wherein said pilot valve (24') is switched to the open position for pressure values of the pressure at the one connection (20') which are higher than or equal to the actual tyre pressure present at the further connection (23'), and is switched to the closed position for pressure values of the pressure at the one connection (20') which are lower than the actual tyre pressure present at the further connection (23').

8. Device according to any of the preceding claims, **characterised in that** the one connection (20; 20') constitutes a single connection for connecting the pressure control apparatus (6; 6') to the chassis-side central apparatus (2).

9. Device according to any of the preceding claims, **characterised in that** the chassis-side central apparatus (2) is connected to the pressure control apparatus (6; 6') via a line (4) which has an axle-side, rotationally fixed line part (4a) and a line part (4b; 4b') which rotates with the wheel, and a rotational connection (5) between the rotationally fixed line part (4a) and the line part (4b; 4b') which rotates with the wheel.

10. Device according to any of the preceding claims, **characterised in that** a pneumatic safety valve (21; 21') is connected, as a 2/2-way valve, between the control valve (11; 11') and the further connection (23; 23'), which pneumatic safety valve (21; 21') is loaded at its pneumatic control connection towards the open position by the actual tyre pressure present at the further connection (23; 23'), and is switched in a spring-loaded fashion to the closed position in the case of an actual tyre pressure below a lower threshold value.

11. Device according to claim 10, **characterised in that** the pressure control apparatus (6; 6') has an inflation connection (22; 22') for external application of pressure to the tyre (8; 8').

## Revendications

1. Procédé d'adaptation de la pression réelle d'au moins un pneumatique (8; 8') d'une roue d'un essieu d'un véhicule à une pression de consigne présente de pneumatique pendant la marche comprenant :
a) un dispositif (2) central du côté du châssis, qui soit établit la pression de pneumatique de consigne présente dans un raccord (20; 20'), tournant avec la roue, d'un dispositif (6; 6') pneumatique de commande de la pression se rapportant à la roue, afin d'adapter la pression réelle du pneumatique à la pression de consigne de pneumatique, soit met ce raccord (20; 20') à l'atmosphère si la pression réelle du pneumatique est égale à la pression de consigne de pneumatique, dans lequel
b) le dispositif (6; 6') de commande de la pression a au moins un autre raccord (23; 23') pouvant être chargé par la pression réelle du pneumatique et
c) au moins une vanne (11; 11') de commande comporte une position de passage mettant le un raccord (20) en communication avec l'autre raccord (23; 23') et une position d'arrêt supprimant cette communication, la vanne (11; 11') de commande étant commandée pneumatiquement en sens inverse et l'un de ses raccords (16a; 16a') de commande pneumatique communiquant avec le un raccord (20; 20'), dans lequel
d) le dispositif (6; 6') de commande de la pression comporte au moins une vanne (13; 24') pilote, qui pilote la vanne (11; 11') de commande et qui ou bien établit la pression régnant sur le un raccord (20; 20') ou la pression réelle du pneumatique régnant sur l'autre raccord (23; 23') dans l'autre raccord (16b; 16b') de commande pneumatique de la vanne (11; 11') de commande ou bien supprime cet établissement, dans lequel
e) la vanne (13; 24') pilote est commandée pneumatiquement au moins par une pression régnant sur le un raccord (20; 20') et/ou au moins par la pression réelle du pneumatique régnant sur l'autre raccord (23; 23'),
**caractérisé en ce que**
f) le dispositif (6; 6') de commande de la pression a un conduit (10; 10') de dérivation, qui contourne la vanne (11; 11') de commande et la vanne (13; 24') pilote, qui met en communication le un raccord (20) avec l'autre raccord (23; 23') et qui a un clapet antiretour (14; 14') s'ouvrant dans la direction d'alimentation en air du pneumatique (8; 8') et se fermant dans la direction de mise à l'atmosphère du pneumatique (8; 8').

2. Dispositif suivant la revendication 1, **caractérisé en ce que** la vanne (11; 11') de commande est une vanne pneumatique à 2/2 voies.

3. Dispositif suivant la revendication 1 ou 2, caractérisé en ce la vanne (13; 24') pilote est une vanne à 2/2 voies commandée pneumatiquement, ayant une position d'arrêt et une position de passage qui, dans la position de passage, établit, dans l'autre raccord (16b; 16') de commande de pneumatique, ou bien la pression régnant dans le un raccord (20; 20') ou bien la pression réelle du pneumatique régnant sur l'autre raccord (23; 23') et, dans sa position d'arrêt, supprime cet établissement.

4. Dispositif suivant la revendication 3, **caractérisé en ce que** la vanne (13) pilote est mise dans la position d'arrêt par des moyens de ressort conçus pour qu'elle soit, pour des valeurs de la pression sur le un raccord (20) plus petites qu'une valeur de seuil supérieure, maintenue dans la position d'arrêt et pour des valeurs de la pression sur le un raccord (20) plus grandes ou égales à la valeur de seuil supérieure, mise dans la position de passage.

5. Dispositif suivant la revendication 4, **caractérisé en ce que** la vanne (11) de commande coopère avec la vanne (13) pilote de manière à ce que
a) pour des valeurs de la pression régnant sur le un raccord (20) plus petites que la valeur de seuil supérieure, la vanne (11) de commande soit mise dans la position de passage et la vanne (13) pilote dans la position d'arrêt
b) pour des valeurs de la pression régnant sur le un raccord (20) supérieures ou égales à la valeur de seuil supérieure, la vanne (11) de commande soit mise dans la position d'arrêt et la vanne (13) pilote dans la position de passage.

6. Dispositif suivant la revendication 3, **caractérisé en ce que** la vanne (24') pilote est une vanne de pression différentielle commandée pneumatiquement qui, par la pression régnant sur le un raccord (20), est mise dans la position de passage et, par la pression réelle du pneumatique régnant sur l'autre raccord (23), est mise dans la position d'arrêt.

7. Dispositif suivant la revendication 6, **caractérisé en ce que** la vanne (24') pilote comprend en outre des moyens (25'; 26') de ressort qui la précontraignent dans la position de passage, dans lequel elle est mise, pour des valeurs de la pression sur le un raccord (20') supérieures ou égales à la pression réelle du pneumatique régnant sur l'autre raccord (23'), dans la position de passage et, pour des valeurs de la pression sur le un raccord (20') plus petites que la pression réelle du pneumatique régnant sur l'autre raccord (23'), est mise dans la position d'arrêt.

8. Dispositif suivant l'une des revendications précédentes, **caractérisé en ce que** le un raccord (20; 20') représente un raccord unique de mise en communication du dispositif (6; 6') de commande de la pression avec le dispositif (2) central du côté du châssis.

9. Dispositif suivant l'une des revendications précédentes, **caractérisé en ce que** le dispositif (2) central du côté du châssis communique avec le dispositif (6; 6') de commande de la pression par un conduit (4) qui a une partie (4a) de conduit fixe en rotation du côté de l'essieu et une partie (4b; 4b') de conduit entraînée en rotation avec la roue, ainsi qu'une liaison (5) tournante entre la partie (4a) de conduit fixe en rotation et la partie (4b; 4b') de conduit entraînée en rotation avec la roue.

10. Dispositif suivant l'une des revendications précédentes, **caractérisé en ce qu'**il est monté entre la vanne (11; 11') de commande et l'autre raccord (23; 23') une vanne (21; 21') pneumatique de sécurité, sous la forme d'une vanne à 2/2 voies qui, sur son raccord de commande pneumatique, est mise par la pression réelle du pneumatique régnant sur l'autre raccord (23; 23') dans la position de passage et qui, pour une pression réelle du pneumatique se trouvant en dessous d'une valeur de seuil inférieure, est mise sous l'action d'un ressort dans la position d'arrêt.

11. Dispositif suivant la revendication 10, **caractérisé en ce que** le dispositif (6; 6') de commande de la pression a un raccord (22; 22') de remplissage pour une alimentation extérieure en pression du pneumatique (8; 8').
